# EUROPEAN PATENT SPECIFICATION

(11) **EP 0 836 324 B1**
(45) Date of publication and mention of the grant of the patent: **08.12.2004**
(21) Application number: 97307923.9
(22) Date of filing: 07.10.1997
(51) Int. Cl.: H04N 7/14

(54) **Integrated portable videoconferencing**
Integrierte tragbare Videokonferenzvorrichtung
Dispositif portatif intégré de vidéoconférence

(30) Priority: 09.10.1996 US 727910
(43) Date of publication of application: 15.04.1998
(60) Divisional application: 04009216.5
(73) Proprietor: Polycom, Inc., Pleasanton, California 94588 (US)
(72) Inventor: Forsberg, Roy W. Jr., Hudson, New Hampshire 03051 (US); Rock, Alan M., Acton, Massachusetts 01720 (US); Nilssen, Andrew H., Framingham, Massachusetts 01701 (US); Kallelis, Dennis S., Salem, Massachusetts 01970 (US); Duckworth, Mark R., Merrimack, New Hampshire 03054 (US)
(74) Representative: Käck, Jürgen, Dipl.-Ing.

(56) References cited:
- DE-A- 4 229 151
- GB-A- 2 286 311
- US-A- 4 817 865
- US-A- 5 557 663

## Description

The invention relates generally to videoconferencing systems, and more particularly, to a portable, easy to set up, videoconferencing system.

Videoconferencing systems operating over the public telephone network have existed commercially for about ten years. The systems can be divided into two primary classes, a group or conference room class of system and a desktop class of system. Traditionally, the group systems are relatively large, freestanding systems shipped in several crates and including, typically separately, an electronics unit containing the coder and decoder (codec), a camera for placement in the conference room, a microphone for placement in the room, and a remote control, either wired or wireless (infrared) for controlling the system.

Desktop systems are typically shipped to the customer in one or more packages and contain one or two electronics boards to install in a personal computer, software to load into the computer, a microphone with a cable to attach to the computer, and a camera with a cable to attach to the computer. Thus, desktop systems operate in conjunction with a personal computer and while they can be moved, are not what is commonly called portable, such as a portable laptop.

GB-A-2286311 discloses a video teleconferencing system for use in an office environment and which is used in connection with a personal computer to enable one party at a first location to visually and audibly communicate with a second party at a second location.

US-A-5557663 discloses an audio-video interface for a multimedia communication system. The interface is configured to perform a multimedia communication when connected to a compatible computer.

According to a first aspect of the invention, there is provided a portable, integrated videoconferencing unit according to claim 1 of the appended claims.

There may be provided a portable videoconferencing system having the elements of a videoconferencing system, including the codec, the camera, and the microphone, and which is integrated into a single unit and packaged in a form factor so that the user can easily carry the system to different locations. The system preferably weights less than 20 pounds (9.12 kg), and can be packaged, for example, in a reusable container, briefcase or suitcase, that allows a user to carry the system, by hand, from room to room, or building to building, and in a car, train, or plane. This system is preferably designed to facilitate easy unpacking and repacking, and the carrying container with a handle, allows the user to carry the system from point to point.

The invention thus relates to a portable, integrated videoconferencing unit as set out in claim 1.

In particular embodiments of the invention, the camera is designed to be a very low noise, preferably worm drive driven camera to provide tilt and pan movement while maintaining a silent running profile. In this manner, the microphones integral with the housing are not adversely affected by camera movement.

In a similar aspect, a fan for air cooling the unit may be mounted in the interior of the unit between two substantially airtight compartments. The fan can move air from one compartment to the other. The compartments may be configured to provide appropriate cooling for the necessary electronics within the housing, and each compartment has openings to ambient air, one compartment for receiving ambient air and the other compartment for providing air from the interior of the housing to the outside environment.

The videoconferencing unit may further feature an answer actuation device integral with the housing and mounted with an exterior access. The activation device can be connected to the electronics board, and the said electronics board, in response to activation of the device, may answer an incoming video conference call.

The portable integrated teleconferencing unit further can have a size and profile so that it can be stably positioned on top of a video monitor, and can be carried easily from location to location. The unit preferably weighs less than 20 pounds (9.12 kg), and more particularly less than 15 pounds (6.8 kg).

In particular aspects of the invention, the microphone is a directional microphone array having at least three microphones and circuitry, associated with the electronics board for operating the array.

Other objects, features, and advantages of the invention will be apparent from the following description taken together with the drawings in which:
Figure 1 is a general exterior view of the videoconferencing unit according to the invention;
Figure 2 is a top perspective view of the interior of the videoconferencing unit with the electronics board in place, in accordance with the invention;
Figure 2A is a top plan view of the interior of the videoconferencing unit with the electronics board and camera in place, in accordance with the invention;
Figure 2B is a front elevation view of the assembly of Figure 2A;
Figure 3 is a view of the videoconferencing unit in accordance with the invention wherein the conferencing unit sits atop a video monitor;
Figure 4 is another top view of the interior of the videoconferencing unit in accordance with the invention;
Figure 5 is a high level illustration of the software at an upgrade server in accordance with the invention;
Figure 6 illustrates a high level view of the 5 software at the video conferencing unit in accordance with a preferred embodiment of the invention; and
Figure 7 is a state diagram at the videoconferencing unit of the software upgrade operation; and

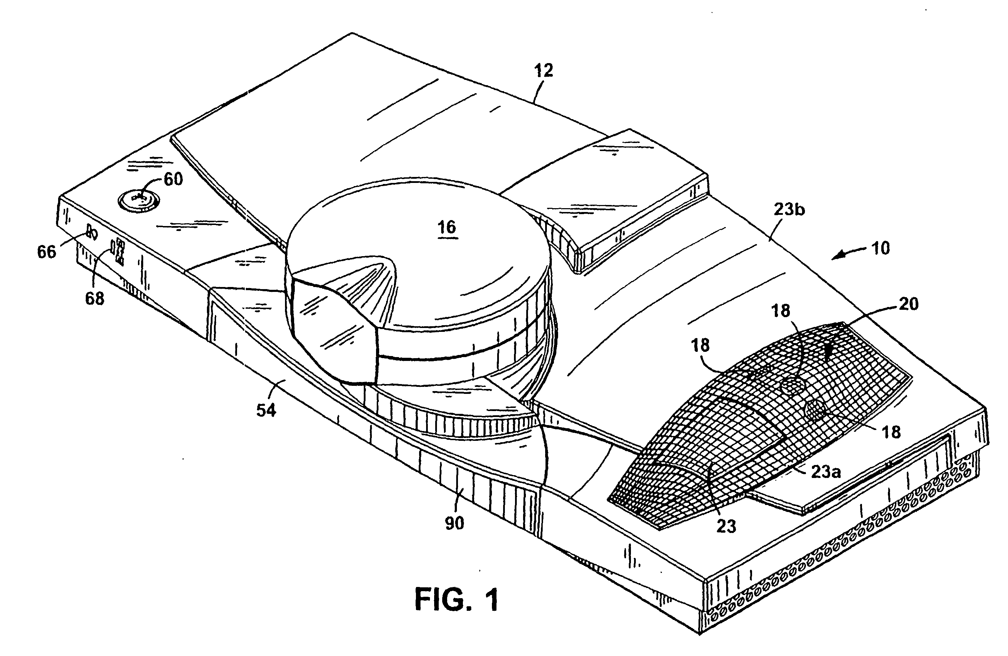

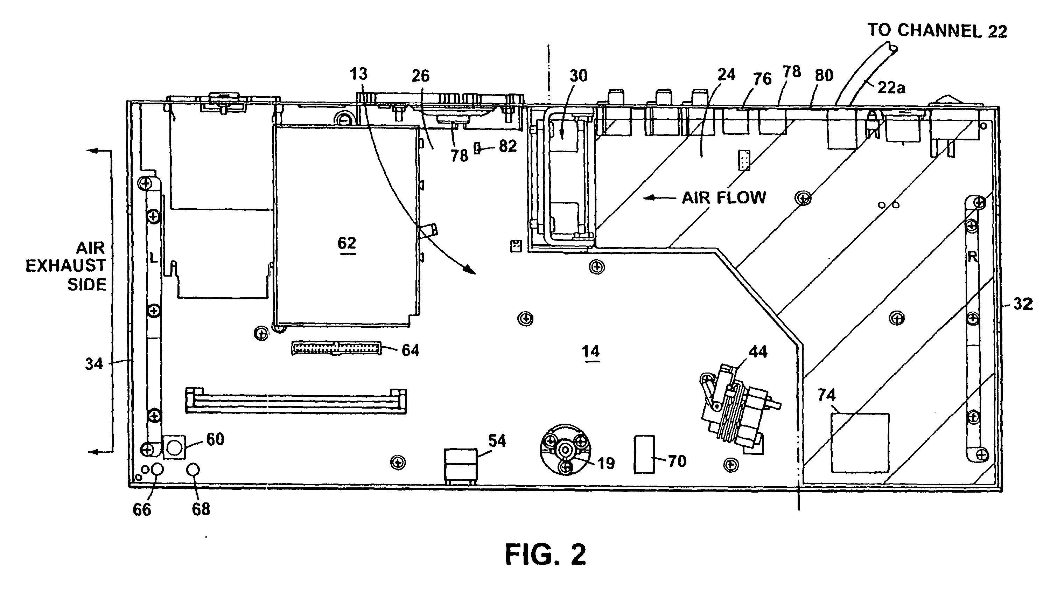

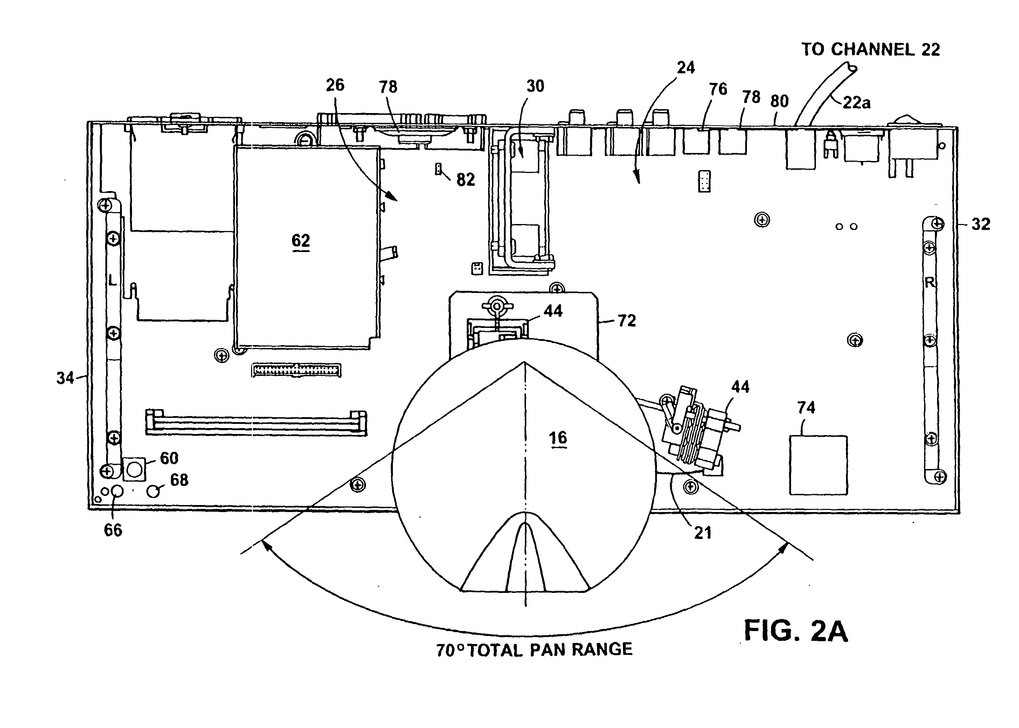

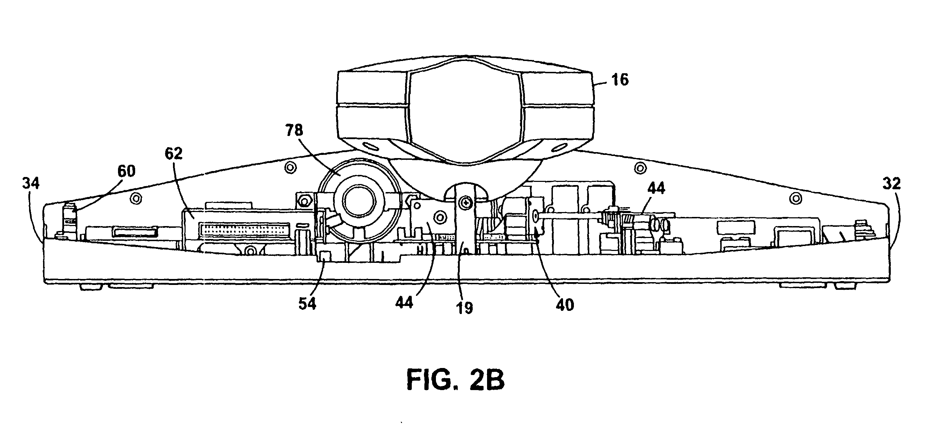

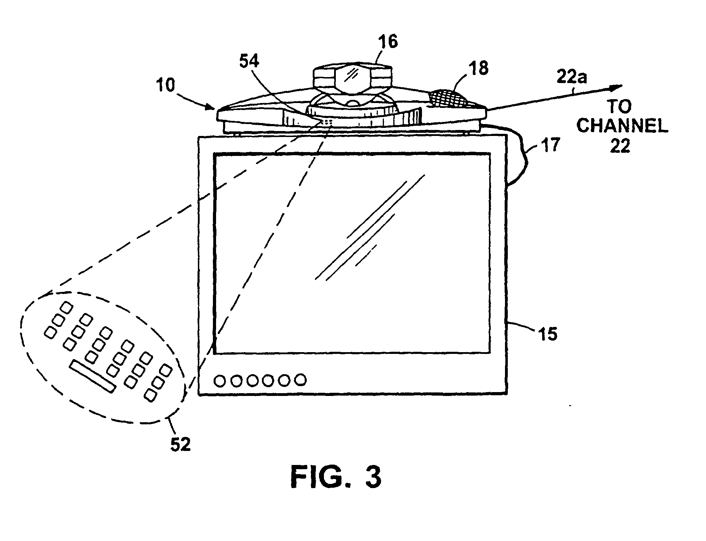

Referring to Figure 1, a portable, integrated videoconferencing unit 10 has an integral housing 12 defining an interior space 13 (Fig. 2) in which the electronics and other components necessary to enable a videoconferencing activity can be housed and/or mounted. The videoconferencing unit 10, therefore, can be connected to an appropriate telecommunications channel 22, for example an ISDN line, a Dialup 56 kbs line, one or more T1 channels, a standard telephone line (POTS), or a packet switched network, and to a video monitor 15 (Fig. 3) which can be either a specially designed monitor without audio capability (in which case additional speaker capability within the integrated unit 10 or associated with the monitor is needed) or a television receiver to which the necessary video and audio signals are provided, and whereby a videoconference can be quickly set up.

The videoconferencing unit 10 is preferably designed to fit in a briefcase style package so that it can be transported easily from location to location, can be placed beneath the seat or stored overhead in an airplane, and generally enables the user to take the videoconferencing equipment with him. At the video site, referring to Figure 3, the videoconferencing unit 10 can be set up positioned on top of the video monitor 15, connected to the video monitor over a cable 17, and connected to the communications channel 22 over a line 22a. As illustrated in Figures 1 and 3, the videoconferencing unit 10 further includes a video camera 16 and at least one microphone 18.

The videoconferencing unit 10 houses an electronics board 14 within the interior space 13 (see Figure 2) with the electronics board performing video and audio processing, as well as enabling the communications to and from a telecommunications channel. In the illustrated embodiment, the electronics board is a single board, however in other embodiments of the invention a plurality of boards may be used. The videoconferencing unit video camera 16, one which has pan and tilt functions, is mounted on the housing at a post 19. Camera 16 provides a video output over a line 21 which is connected to the electronics board. The videoconferencing unit in the illustrated embodiment has at least one microphone 18 mounted on the housing and having an audio output connected to the electronics board. In the preferred and illustrated embodiment of the invention, three microphones 18 are provided which together form a directed array 20 using an associated audio processing circuit 23 to provide an enhanced audio output from the audio unit, as described in U.S. Serial No. 08/657,636, filed May 30, 1996. The output of the audio acquisition system (microphones 18 and circuit 23) is connected to the electronics board for processing. The videoconferencing unit also has the capability of receiving externally generated video and audio signals, for example, from a video tape recorder, through, for example, connectors mounted on the rear of the housing. (In the illustrated embodiment, the microphones 18 and circuitry 23 are positioned beneath grill 23a on the top cover section 23b.)

The electronics board, which is comprised of a large number of electronic components and processors, 5 receives and processes the video output from camera 16 and the audio output from the microphone array 20 and circuit 23, and generates a compressed video output signal and a compressed audio output signal for transmission over the communications channel 22. The compressed signal preferably meets at least one of the ITU H series standards (for example, H.320, H.323, H.324, etc.) so as to be compatible with any other video conferencing unit operating according to that standard. The video output is typically sent to a transmission medium, for example an ISDN line, for transmission to a distant location. In other instances, other high-speed digital or analog communications lines 22 can be employed.

In other aspects, if the electronics board is configured to provide compressed video and audio data for output over the direct dial telephone network (POTS), then the system will provide a lesser signal quality due to the more restricted bandwidth of the communications channel. On the other hand, POTS is available at substantially every location (ISDN and other high speed digital channels must have been previously and specially installed) and hence greater access is possible over the POTS line.

The electronics board also receives from the communications channel 22 video conferencing signals representing compressed video and audio from a far end unit. These videoconferencing signals are decompressed by the electronics board to generate decompressed far end audio and video signals. The decompressed audio signals are either sent to a speaker system which is part of the video monitor for appropriate playback, or are combined with the video signals and sent to the video monitor as a single NTSC signal, that is, as a combined video and audio signal. The video monitor can thus be a television receiver in which case the video and audio signals can be separately provided (as from a video tape player) or can be combined into a standard NTSC signal for playback over, for example, channel 3 of the television receiver. The communications channel 22 connects to the housing 12 for electrical connection to the electronics board.

Referring now to Figure 2, the electronics board 14 is rigidly maintained within the interior space 13 of the housing 12. Preferably, interior space 13 has at least two compartments 24 and 26. In the preferred embodiment of the invention, these compartments must be air cooled since, as the electronics become more densely packed on the electronics board 14, the need to cool the electronics increases. In the illustrated embodiment of the invention, however, since the microphones 18 are an integral part of the videoconferencing unit 10 and are integral to and mounted on the housing 12, vibration and noise from fan operation can severely impact the quality of the audio signal being received, to the extent of rendering unacceptable, the signal to noise ratio of the signal. Thus, to minimize the effect of both noise and vibration on the microphones 18, the fan is mounted interiorly and rearwardly in the housing, to separate the fan from the microphones physically and acoustically.

Thus, a cooling fan 30 is mounted at an interior location of the housing, and in the illustrated embodiment, is mounted between compartments 24 and 26 to effect air flow from one compartment to the other. Each compartment is itself substantially air tight (although some leakage will occur, for example, as illustrated in Fig. 2) except for openings to the ambient environment. Thus, operation of the fan 30 causes ambient air to be brought into one compartment, compartment 24 in the illustrated embodiment, through a side wall 32, and passed through compartment 24 to the other compartment 26 from which it exhausts to the ambient environment through a side wall 34. The fan itself, in addition to being a low noise fan, is mounted especially to minimize and eliminate the transfer of any vibrational motion to the housing itself, and further to provide sound insulation between the fan and the microphones. In this manner, the microphones are both mechanically and acoustically insulated from the fan, and noise from the fan, relatively loud and unshielded in its normal exterior position wherein it is mounted to directly communicate through a side wall of the housing, is substantially reduced or eliminated.

The housing also, as illustrated in particular in Figures 2 and 2A, mounts the video camera 16 at post 19. The video camera, when in operation, could create noise and vibration since it is a relatively heavy object being moved, in the illustrated embodiment, in both the pan and tilt axes. Accordingly, a worm drive design 40 driven by quiet and shock mounted motors 44, both, known for low vibration and noise, are used for effecting pan and tilt motion of the camera thus reducing both noise and vibration pick-up by the microphone array.

In the integrated videoconferencing unit, referring to Fig. 3, a remote control, infrared system is implemented, as is well known in the art. The infrared remote control system enables a user, located at a distance from the videoconferencing unit itself, to control the audio and video functions of the unit from a hand-held remote control console 52. This is similar to the control unit used with room conferencing systems such as those sold by PictureTel Corporation of Andover, Massachusetts. A receptor 54, mounted in the front of unit 10, connects to the electronic board 14 for controlling various operations of the system.

The hand-held remote control device 52, however, can often be mislaid, temporarily, especially in a room setting with substantial paper and other elements as opposed to a conference room setting which is kept relatively clear. To alleviate the need to immediately find the remote control unit to answer a call, while preserving the ability to selectively screen incoming calls, the integrated videoconferencing unit 10 has an activation answer device 60 mounted integrally on the housing top surface to enable the user to screen incoming calls and to answer them without having to locate the remote control unit. Thus, by depressing device 60 which is accessible from the top front of the unit, a call can be "picked up" even before all of the controls desirable to handle the call have been located. This activation element, typically a pushbutton, is electrically connected to the electronic board which will answer the call upon activation of the pushbutton.

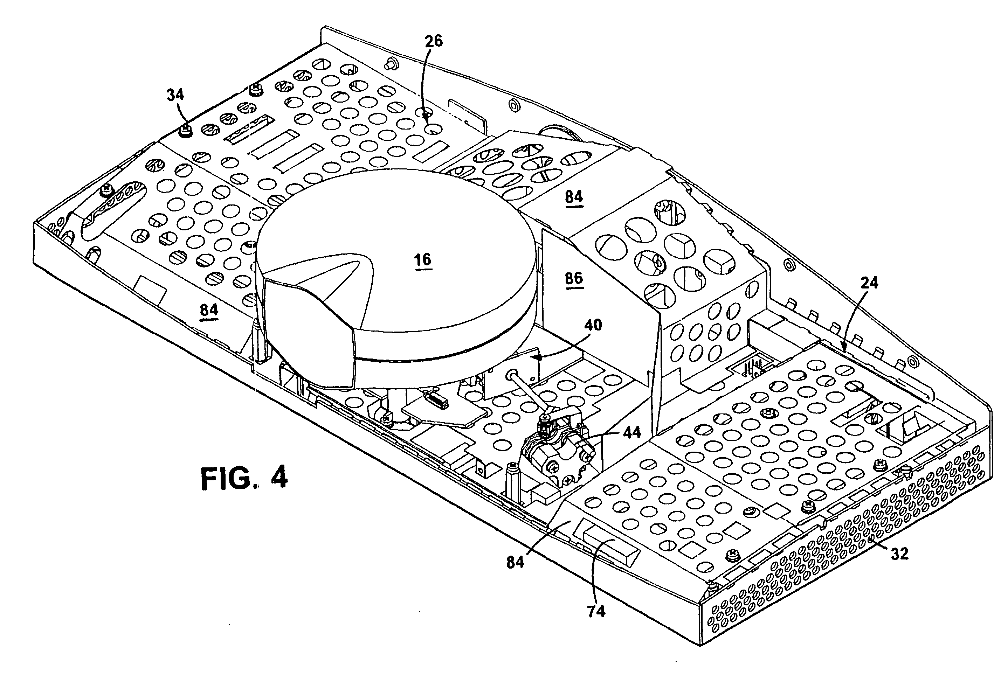

Mechanically, referring to Figures 2, 2A, 2B and 4, the electronic board 14 is a printed circuit board designed to fit across the entire "floor" or pan of the videoconferencing unit. The circuit board is notched to fit around the fan. On top of the electronics board is mounted a hard disk drive 62 connected to a connector 64 on the board through a flexible ribbon cable (not shown), the answer device 60, two LEDs 66, 68, indicating "power on" and "call-in-process", a connector 70 for connecting the electronics board to the camera electronics 72, a connector 74 for interfacing and connecting to the microphone electronics, and a connector 76 for connecting to the external video and audio. In addition, a speaker 78 is mounted in the back side wall 80 and connects at a connector 82 on the electronics board. Once the connections are in place, and the camera is mounted on camera post 19, EMI shielding 84 (Figure 4) and a thermal barrier 86 is provided to complete the interior chamber configuration. In this process, the motor control connects through motors 44 to effect the pan and tilt motion for the camera. One motor and the camera electronics 72, rotate with the camera and connect through flexible wiring to connector 70.

In order to reduce noise and vibration, motors 44 are mounted on vibration absorbing polypropylene through a so-called living hinge mounting process. In a similar manner, the hard drive is mounted to isolate it from the rest of the system with regard to both noise and vibration.

Since the compartments 24 and 26 are not "airtight", and since ambient air intake is primarily in compartment 24, most of the electronics requiring substantial cooling are located in compartment 24 which receives the cooler air from the ambient atmosphere. The fan then moves this air from compartment 24 through compartment 26 and exhausts through side wall 34. The top cover is then placed on the assembly and a front bezel 90 is added to complete the unit. Infrared receiver 54 is located in the front of the videoconferencing unit behind the infrared transparent bezel.

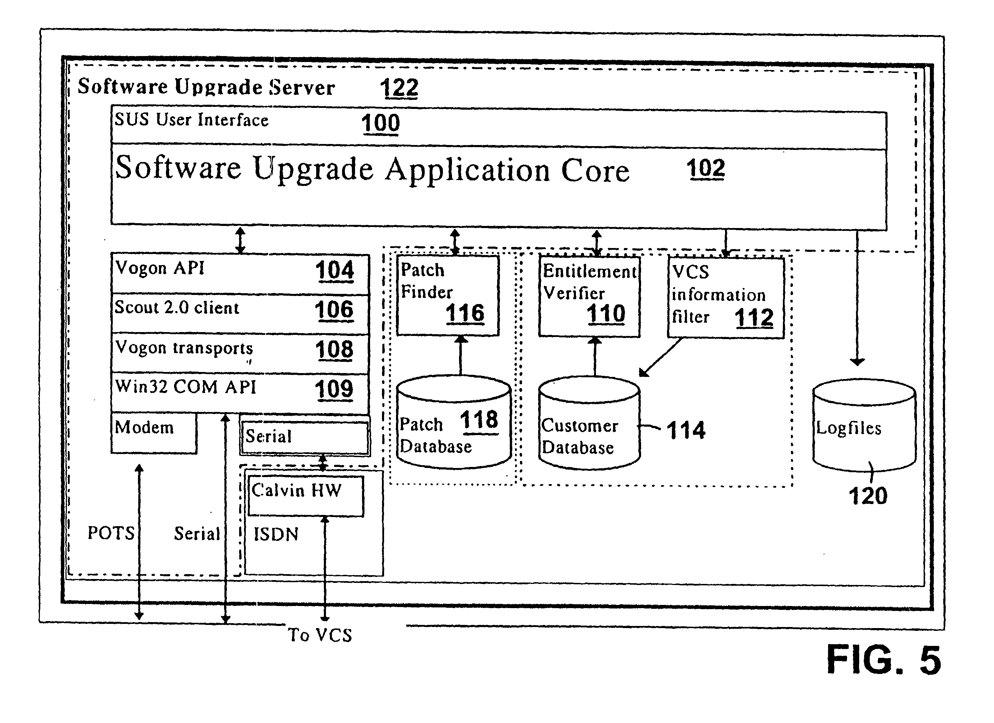

In order to enhance the portability of the videoconferencing unit 10, and to enable it to remain "state of the art", the software programs which enable the functioning of the videoconferencing unit 10 can be upgraded by a videoconference call to a distant upgrade server. Referring to Figure 5, in a high level view of the design of the server, the server software has a plurality of operating layers, and includes user interface 100, a software upgrade application core 102, a remote software Application Programmer's Interface 104, a remote software client server 106, a remote transport software 108, a Win32 communications Application Programmer's Interface (COM API) 109, an entitlement verifier 110, a videoconferencing system information filter 112, a customer database 114, a patch finder 116, a patch database 118, logfiles 120, and a link to the communication channels 22 which as noted above, can include POTS, ISDN, packet switched, or other serial ports. Together, all of these components identify the software upgrade server 122. This server manages the upgrading of videoconferencing systems that call into it without user intervention.

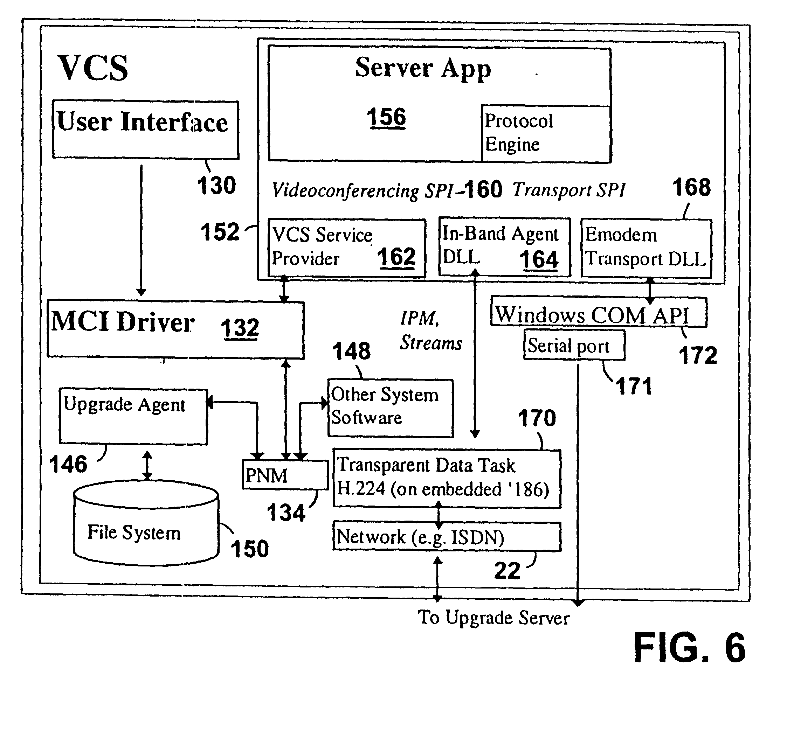

A high level view of the corresponding software design for the videoconferencing unit 10 is illustrated in Figure 6. Accordingly, the layered software of the videoconferencing unit 10 includes a user interface 130, an MCI driver 132, a PNM 144, an upgrade agent 146, system software 148, a file system 150, and the software core program 152. The software core program includes a server application and protocol engine 156, a videoconferencing SPI 158, a transport SPI 160, a VCS service provider 162, an in-band agent 164, and an EModem Transport DLL 168. These elements communicate with the transparent data task of H.224 (170) which in turn communicates with the network to the software upgrade server. This can also be performed through a serial port communication 171, through a Windows COM API 172 from the server application as illustrated in Figure 6.

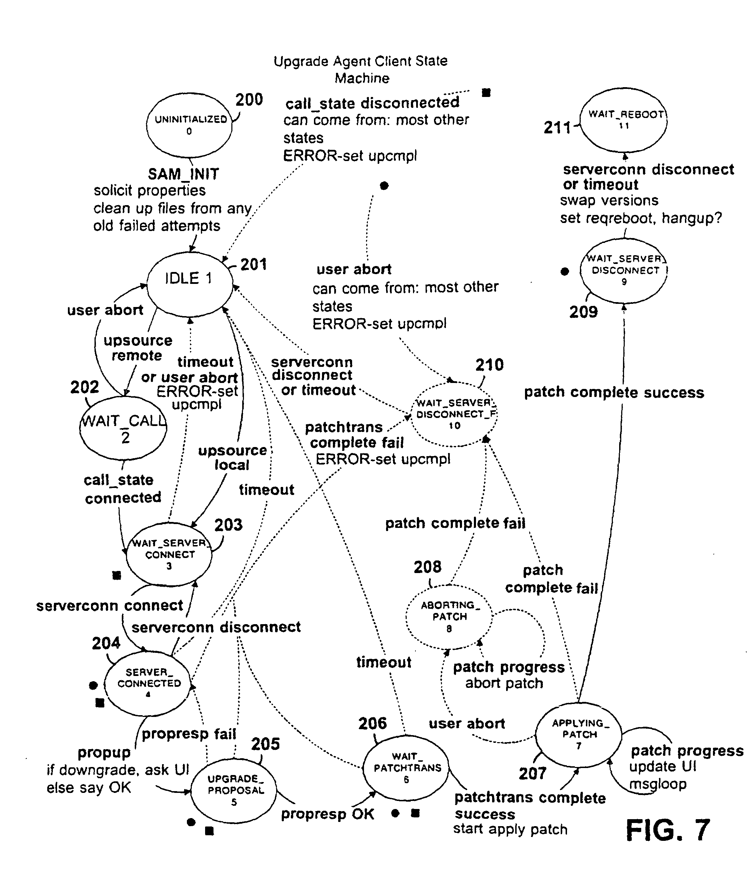

Referring now to figure 7, the upgrade agent client can be viewed as a state machine. The system thus drives the logic in the videoconferencing system when it is in a "videoconference" with the upgrade server. Referring therefore to Figure 7, the upgrade client starts in an uninitialized state 200 and moves to idle state 201 during system initialization, where it remains for normal videoconferencing. The state machine begins the remote upgrade operation when it receives the upsource remote command, which is initiated through the remote control 52 and an on-screen menu. In the normal operation, the state machine transitions through the following states, in order: wait for call 202, wait for connection 203, connected 204, proposal 205, wait for patch transfer 206, applying patch 207, wait for disconnect 209, and wait for reboot 211. Other transitions can occur due to errors or an abort command initiated by the user.

In state 202, the upgrade client waits for completion of the call to the upgrade server. An abort command sends it back to state 201. When the call is complete, in state 203, the client waits for the server to begin communication. An error event sends it back to state 201. Once the server is connected, in state 204, the client waits for an upgrade proposal from the server. An error event sends it to state 210 or 201. The server makes the proposal, which puts the client in state 205. The client now has the opportunity to accept or reject the proposal. Normally, the client will accept the proposal. The client could reject the proposal if, for example the server actually proposed a downgrade instead of an upgrade. If the client rejects the proposal, it goes back to state 204. If it accepts the proposal, it moves on to state 206 where it waits to receive the patch file from the server. After the patch file is received, the client applies the patch in state 207. If the patch fails, the client moves to state 210 and then back to state 201. If the user aborts during state 207, the client moves to state 208 then to state 210. If the patch is applied successfully, the client moves to state 209, waits for the server to disconnect, and then moves to state 211 where the system can be rebooted.

Accordingly, the software upgrade can be accomplished without the need of user intervention. The videoconferencing unit 10 is thus truly portable and can be upgraded, simply and easily, during a conference call, not only by a customer engineer, but by any user, simply by dialing the videoconference number of the upgrade server.

Thus, in operation, the video conferencing unit of the claimed invention can be carried to a site, unpacked in substantially short time, and placed atop a video monitor as illustrated in Figure 3. Connections from the videoconferencing unit to the communications channel and the video monitor are then made, power is provided from an electrical outlet, and the user is ready to initiate or receive a videoconference call. If the user is making a call, he can access the necessary functions through his remote control unit 52 to dial the numbers necessary to initiate a videoconference. If a call is inbound, the user can use the handheld remote control unit 52 to answer the call, can place the unit in an auto-answer mode, or can simply depress the answer device 60 on the main console unit 10. The remote control provides pan and tilt activation of the camera.

## Claims

1. A portable, integrated videoconferencing unit (10) comprising
an integral housing (12) having an electronics containing interior chamber (13),
a video camera (16) integrally mounted on said housing,
a microphone assembly having at least one microphone (18) mounted on said housing, and
a camera mount (19) for mounting said camera (16) for tilt motion;
**characterized by**
an electronics board (14), contained within said chamber, said electronics board performing video and audio processing, said video camera (16) having a video output connected to said electronics board and said microphone assembly having an audio output connected to said electronics board,
said electronics board receiving and processing said video output and said audio output and generating a compressed video output signal and a compressed audio output signal for transmission over a communications channel (22),
said electronics board further receiving videoconferencing signals from the communications channel, said videoconferencing signals representing compressed video and audio from a far end unit, and decompressing said compressed video and audio of said videoconferencing signals to generate decompressed far end video and audio signals,
a channel connection integral with the housing for enabling an electrical access to said decompressed video and audio signals,
a channel connection integral with the housing for enabling an electrical connection to the communications channel,
a motor control and motors (44) to effect a pan and the tilt motion of the video camera (16), said camera mount (19) further mounting said video camera (16) for the pan motion, and
an infrared communications system for enabling a user, distanced from said videoconferencing unit, to remotely operate said unit, wherein said pan and tilt motion of the camera is controllable by said infrared communications system.

2. The portable, integrated videoconferencing unit (10) of claim 1 further comprising
an answer actuation device (60) integral with said housing (12) and mounted with exterior access, said activation device being connected to said electronics board (14), and
said electronics board, in response to activation of said device, answering an incoming videoconference call.

3. The portable, integrated videoconferencing unit (10) of claim 1 wherein said housing (12) has a size suitable to be stably positioned on top of a video monitor.

4. The portable, integrated videoconferencing unit (10), of claim 1 wherein said communications channel (22) is an ISDN line and said electronics board (14) has a channel connection for communicating in an ISDN protocol.

5. The portable, integrated videoconferencing unit (10) of claim 1 wherein said communications channel (22) is a packet switched network, and said electronics board (14) has a channel connection for communicating in a protocol compatible with said packet switched network.

6. The portable, integrated videoconferencing unit (10) of claim 1 wherein said communications channel (22) is a POTS line, and said electronics board (14) has a channel connection for communicating in accordance with a POTS compatible protocol.

7. The portable, integrated videoconferencing unit (10) of claim 1 wherein said housing interior chamber (13) has at least two compartments (24, 26) in air communication with each other through an interiorly mounted air movement unit (30), said air movement unit mounted for moving air from one compartment to another compartment while note adversely affecting operation of said microphones (18), and
said compartments each being substantially air-tight except for at least one ambient air opening in each compartment
whereby in operation, said air movement unit causes air cooling of said electronics board (14).

8. The portable, integrated videoconferencing unit (10) of claim 1 wherein said microphone assembly comprises a directional microphone array (20) having at least three microphones (18) and a microphone electronics board for operating said microphone array.

9. The portable, integrated videoconferencing unit (10) of claim 1 wherein said camera mount (19) includes a worm gear drive (40) for rotating said camera within a minimum noise criteria.

10. The portable, integrated videoconferencing unit (10) of claim 1 wherein said unit weights less than 9.12 kg.

## Patentansprüche

1. Tragbare, integrierte Videokonferenzeinheit (10) mit
einem einteiligen Gehäuse (12) mit einer eine Elektronik enthaltenden inneren Kammer (13),
einer Videokamera (16), die einteilig an dem Gehäuse montiert ist,
einer Mikrophonanordnung mit mindestens einem Mikrophon (18), das am Gehäuse montiert ist, und
einer Kamerahalterung (19) zum Montieren der Kamera (16) für eine Neigungsbewegung;
**gekennzeichnet durch**
eine Elektronikflachbaugruppe (14), die innerhalb der Kammer enthalten ist, wobei die Elektronikflachbaugruppe eine Video- und Audioverarbeitung durchführt, wobei die Videokamera (16) einen Videoausgang aufweist, der mit der Elektronikflachbaugruppe verbunden ist, und die Mikrophonanordnung einen Audioausgang aufweist, der mit der Elektronikflachbaugruppe verbunden ist,
wobei die Elektronikflachbaugruppe das Videoausgangssignal und das Audioausgangssignal empfängt und verarbeitet und ein komprimiertes Videoausgangssignal und ein komprimiertes Audioausgangssignal zur Übertragung über einen Kommunikationskanal (22) erzeugt,
wobei die Elektronikflachbaugruppe ferner Videokonferenzsignale vom Kommunikationskanal empfängt, wobei die Videokonferenzsignale komprimiertes Video und Audio von einer fernen Einheit darstellen, und das komprimierte Video und Audio der Videokonferenzsignale dekomprimiert, um dekomprimierte ferne Video- und Audiosignale zu erzeugen,
einer mit dem Gehäuse einteiligen Kanalverbindung zum Ermöglichen eines elektrischen Zugriffs auf die dekomprimierten Videc- und Audiosignale,
einer mit dem Gehäuse einteiligen Kanalverbindung zum Ermöglichen einer elektrischen Verbindung mit dem Kommunikationskanal,
einer Motorsteuerung und Motoren (44), um eine Schwenk- und die Neigungsbewegung der Videokamera (16) zu bewirken, wobei die Kamerahalterung (19) ferner die Videokamera (16) für die Schwenkbewegung hält, und
einem Infrarot-Datenübertragungssystem, um einem Benutzer zu ermöglichen, in einem Abstand von der Videokonferenzeinheit die Einheit fernzusteuern, wobei die Schwenk- und Neigungsbewegung der Kamera **durch** das Infrarot-Datenübertragungssystem steuerbar ist.

2. Tragbare, integrierte Videokonferenzeinheit (10) nach Anspruch 1, welche ferner umfasst:
eine mit dem Gehäuse (12) einteilige Antwortaktivierungsvorrichtung (60), die mit einem äußerem Zugang montiert ist, wobei die Aktivierungsvorrichtung mit der Elektronikflachbaugruppe (14) verbunden ist, und
die Elektronikflachbaugruppe als Reaktion auf die Aktivierung der Vorrichtung einen ankommenden Videokonferenzanruf beantwortet.

3. Tragbare, integrierte Videokonferenzeinheit (10) nach Anspruch 1, wobei das Gehäuse (12) eine Größe aufweist, die geeignet ist, damit es stabil auf einem Videomonitor positioniert wird.

4. Tragbare, integrierte Videokonferenzeinheit (10) nach Anspruch 1, wobei der Kommunikationskanal (22) eine ISDN-Leitung ist und die Elektronikflachbaugruppe (14) eine Kanalverbindung zum Kommunizieren in einem ISDN-Protokoll aufweist.

5. Tragbare, integrierte Videokonferenzeinheit (10) nach Anspruch 1, wobei der Kommunikationskanal (22) ein Paketvermittlungsnetz ist und die Elektronikflachbaugruppe (14) eine Kanalverbindung zum Kommunizieren in einem Protokoll, das mit dem Paketvermittlungsnetz kompatibel ist, aufweist.

6. Tragbare, integrierte Videokonferenzeinheit (10) nach Anspruch 1, wobei der Kommunikationskanal (22) eine POTS-Leitung ist und die Elektronikflachbaugruppe (14) eine Kanalverbindung zum Kommunizieren gemäß einem POTSkompatiblen Protokoll aufweist.

7. Tragbare, integrierte Videokonferenzeinheit (10) nach Anspruch 1, wobei die innere Gehäusekammer (13) mindestens zwei Abteile (24, 26) in Luftverbindung miteinander durch eine intern montierte Luftbewegungseinheit (30) aufweist, wobei die Luftbewegungseinheit zum Bewegen von Luft von einem Abteil zu einem anderen Abteil montiert ist, während der Betrieb der Mikrophone (18) nicht nachteilig beeinflusst wird, und
die Abteile jeweils im Wesentlichen luftdicht sind, abgesehen von mindestens einer Umgebungsluftöffnung in jedem Abteil
wobei die Luftbewegungseinheit im Betrieb eine Luftkühlung der Elektronikflachbaugruppe (14) bewirkt.

8. Tragbare, integrierte Videokonferenzeinheit (10) nach Anspruch 1, wobei die Mikrophonanordnung eine Richtmikrophonanordnung (20) mit mindestens drei Mikrophonen (18) und eine Mikrophon-Elektronikflachbaugruppe zum Betreiben der Mikrophonanordnung umfasst.

9. Tragbare, integrierte Videokonferenzeinheit (10) nach Anspruch 1, wobei die Kamerahalterung (19) einen Schneckenantrieb (40) zum Drehen der Kamera innerhalb minimaler Geräuschkriterien umfasst.

10. Tragbare, integrierte Videokonferenzeinheit (10) nach Anspruch 1, wobei die Einheit weniger als 9,12 kg wiegt.

## Revendications

1. Unité de vidéoconférence intégrée portative (10) comprenant
un boîtier (12) monobloc ayant une chambre intérieure (13) contenant des éléments électroniques,
une caméra vidéo (16) entièrement montée avec ledit boîtier,
un assemblage de microphones ayant au moins un microphone (18) monté sur ledit boîtier, et
une monture (19) pour la caméra pour monter ladite caméra (16) en vue d'un mouvement de basculement ;
**caractérisée par**
une carte électronique (14) contenue à l'intérieur de ladite chambre, ladite carte électronique effectuant le traitement audio et vidéo, ladite caméra vidéo (16) ayant une sortie vidéo reliée à ladite carte électronique et ledit assemblage de microphones ayant une sortie audio reliée à ladite carte électronique,
ladite carte électronique recevant et traitant ladite sortie vidéo et ladite sortie audio et générant un signal de sortie vidéo compressé et un signal de sortie audio compressé à transmettre par le canal de communication (22),
ladite carte électronique recevant en outre les signaux de vidéoconférence provenant du canal de communication, lesdits signaux de vidéoconférence représentant les signaux audio et vidéo compressés provenant d'une unité distante, et décompressant lesdits signaux audio et vidéo compressés desdits signaux de vidéoconférence afin de générer des signaux audio et vidéo distants décompressés,
une connexion de canal faisant corps avec le boîtier pour permettre un accès électrique auxdits signaux audio et vidéo décompressés,
une connexion de canal faisant corps avec le boîtier pour permettre une connexion électrique vers le canal de communication,
une commande de moteur et des moteurs (44) pour effectuer un mouvement panoramique et de basculement de la caméra vidéo (16), ladite monture (19) de caméra étant destinée en outre à monter la caméra (16) en vue du mouvement panoramique, et
un système de communication à infrarouge destiné à permettre à un utilisateur, à distance de ladite unité de vidéoconférence, à faire fonctionner à distance ladite unité, dans laquelle ledit mouvement panoramique et de basculement de la caméra peut être commandé par ledit système de communication à infrarouge.

2. Unité de vidéoconférence intégrée portative (10) selon la revendication 1, comprenant en outre
un dispositif d'activation de réponse (60) faisant corps avec ledit boîtier (12) et monté avec un accès extérieur, ledit dispositif d'activation étant relié à ladite carte électronique (14), et
ladite carte électronique, en réponse à l'activation dudit dispositif, répondant à un appel de vidéoconférence entrant.

3. Unité de vidéoconférence intégrée portative (10) selon la revendication 1, dans laquelle ledit boîtier (12) est de taille appropriée pour être placé de manière stable sur un moniteur vidéo.

4. Unité de vidéoconférence intégrée portative (10) selon la revendication 1, dans laquelle ledit canal de communication (22) est une ligne RNIS et ladite carte électronique (14) a une connexion de canal pour communiquer dans un protocole RNIS.

5. Unité de vidéoconférence intégrée portative (10) selon la revendication 1, dans laquelle le canal de communication (22) est un réseau de commutation par paquets et ladite carte électronique (14) a une connexion de canal pour communiquer dans un protocole compatible avec ledit réseau à commutation par paquets.

6. Unité de vidéoconférence intégrée portative (10) selon la revendication. 1, dans laquelle le canal de communication (22) est une ligne de service téléphonique de base ou standard (POTS) et ladite carte électronique (14) a une connexion de canal pour communiquer conformément à un protocole compatible avec un service téléphonique de base ou standard.

7. Unité de vidéoconférence intégrée portative (10) selon la revendication 1 dans laquelle ladite chambre intérieure (13) du boîtier a au moins deux compartiments (24, 26) en communication par air l'un avec l'autre par une unité de mouvement d'air montée à l'intérieur, ladite unité de mouvement d'air étant montée pour déplacer l'air d'un compartiment à un autre compartiment tout en n'affectant pas négativement le fonctionnement desdits microphones (18), et
lesdits compartiments étant chacun essentiellement hermétiques à l'air sauf pour au moins une ouverture sur l'air ambiant dans chaque compartiment
moyennant quoi en fonctionnement, ladite unité de mouvement d'air provoque un refroidissement de l'air de ladite carte électronique (14).

8. Unité de vidéoconférence intégrée portative (10) selon la revendication 1, dans laquelle ledit assemblage de microphones comprend un arrangement de microphones directionnel (20) ayant au moins trois microphones (18) et une carte électronique de microphone pour faire fonctionner ledit arrangement de microphone.

9. Unité de vidéoconférence intégrée portative (10) selon la revendication 1, dans laquelle ladite monture (19) pour la caméra inclut un entraînement à vis sans fin (40) pour faire tourner ladite caméra dans les limites de critères sonores minimum.

10. Unité de vidéoconférence intégrée portative (10) selon la revendication I, dans laquelle ladite unité pèse moins de 9,12 kg.
